# EUROPEAN PATENT APPLICATION

(11) **EP 1 870 738 A2**
(43) Date of publication of application: **26.12.2007**
(21) Application number: 07011958.1
(22) Date of filing: 19.06.2007
(51) Int. Cl.: G02B 1/10, B05C 11/08

(54) **Spin coating apparatus and coating method of composition for antireflection layer**

(30) Priority: 22.06.2006 JP 2006172250
(71) Applicant: Seiko Epson Corporation, Shinjuku-ku, Tokyo 163-0811 (JP)
(72) Inventor: Takada, Keisuke c/o Seiko Epson Corporation, Suwa-shi Nagano-ken 392-8502 (JP); Karasawa, Isao c/o Seiko Epson Corporation, Suwa-shi Nagano-ken 392-8502 (JP)
(74) Representative: HOFFMANN EITLE

(57) **Abstract**

A spin coating apparatus includes a cleaning liquid ejection device (11) that supplies a cleaning liquid primarily containing water to a surface of a lens base material, an antireflection-layer composition ejection device (12) that supplies a composition for an antireflection layer to form an antireflection layer on the surface of the lens base material, a holding portion that rotatably holds the lens base material, a liquid storage portion that stores the liquids supplied from the cleaning liquid ejection device and the antireflection-layer composition ejection device to the lens base material and flowing down, an apparatus main body in which the lens base material is accommodated, an air supply device that supplies cleaning air to the apparatus main body, and an exhaust unit that exhausts contaminated air in the apparatus main body to the outside.

## Description

### BACKGROUND

### 1. Technical Field

The present invention relates to a spin coating apparatus and a method of coating a composition for an antireflection layer.

### 2. Related Art

In a known plastic lens, such as glasses, a hard coat layer is formed on a surface of a lens base material directly or through a primer layer. Further, an antireflection layer is formed on the surface of the hard coat layer to prevent ghost or flicker.

The antireflection layer is usually formed as a multilayer film by a vacuum deposition method. In recent years, however, there is suggested a composition for an antireflection layer that is formed of a curable liquid having a reflection preventing function. In general, in a method of coating a composition for an antireflection layer, the composition for an antireflection layer is coated on the lens base material, on which the hard coat layer is formed directly or through the primer layer, and then cured.

Examples of the method of coating a composition for an antireflection layer include an immersion method or a spin coating method. Of them, in the spin coating method, the composition for an antireflection layer is ejected on the surface of the plastic lens, on which the hard coat layer is previously formed directly or through the primer layer, and the plastic lens rotates to form the antireflection layer. According to this spin coating method, a uniform and high-quality antireflection layer is formed, a high processing speed is realized, and a compact apparatus is obtained.

JP-A-2003-290704 discloses one of the spin coating methods. According to this spin coating method, after the lens base material is held by a holding/rotating member and immediately before the composition for an antireflection layer is ejected on the plastic lens, a low-boiling point solvent, such as isopropyl alcohol (IPA), is ejected on the surface of the rotating lens base material and then shaken off by rotating the lens base material at a predetermined rotation speed, such that the plastic lens is cleaned and dried.

However, in an apparatus main body, when the composition for an antireflection layer is ejected and the lens base material rotates at a predetermined rotation speed, mists or particles may occur. For this reason, even if the surface of the lens base material is cleaned using the IPA as described in JP-A-2003-290704, the mists or particles are stuck to the surface of the lens while the composition for an antireflection layer is ejected and shaken off by rotating the lens base material, which causes an undesirable exterior appearance.

### SUMMARY

An advantage of some aspects of the invention is that it provides a spin coating apparatus for a lens that prevents an extraneous substance from being stuck to a surface of a lens, thereby obtaining a good exterior appearance, and a method of coating a composition for an antireflection layer.

According to an aspect of the invention, a spin coating apparatus includes a cleaning liquid ejection device that supplies a cleaning liquid primarily containing water to a surface of a lens base material, an antireflection-layer composition ejection device that supplies a composition for an antireflection layer to form an antireflection layer on the surface of the lens base material, a holding portion that rotatably holds the lens base material, a liquid storage portion that stores the liquid being supplied from the cleaning liquid ejection device and the antireflection-layer composition ejection device to the lens base material and flowing down, an apparatus main body in which the lens base material is accommodated, an air supply device that supplies cleaning air to the apparatus main body, and an exhaust unit that exhausts contaminated air in the apparatus main body to the outside.

With this configuration, an air flow can be generated in the apparatus main body by the air supply device and the exhaust unit. Accordingly, mists or particles that are floating in the apparatus main body can be moved according to the air flow. Further, the air flow passes by the liquid storage portion that stores the cleaning liquid and the composition for an antireflection layer. Accordingly, the mists or particles can be absorbed into the liquid stored in the liquid storage portion.

Therefore, since the mists or particles in the apparatus main body can be removed, and the mists or particles can be prevented from being stuck to the lens base material. As a result, it is possible to provide a lens having an excellent exterior appearance.

The spin coating apparatus according to the aspect of the invention may further include an outer wall that covers the lens base material in the apparatus main body. An opening, which allows a flow of cleaning air to be sent from the air supply device to the lens base material, may be formed in an upper portion of the outer wall, and an exhaust opening may be formed in an outer circumferential portion that is formed to surround the outer circumference of the outer wall.

With this configuration, since the outer wall is formed, air that is supplied toward the lens base material by the air supply device moves downward through a space between the outer wall and the holding portion and is discharged from an exhaust opening. Accordingly, an air flow can be generated in the apparatus main body, such that mists or particles that are floating in the apparatus main body can move around the liquid storage portion. Therefore, the mists or particles can be efficiently absorbed into the solution of the liquid storage portion.

In the spin coating apparatus according to the aspect of the invention, a pipe may be formed in the storage portion upright from the bottom of the liquid storage portion to allow a waste liquid to flow outside the apparatus.

With this configuration, the end of the pipe protrudes upward from the bottom of the liquid storage portion. Accordingly, if the liquid level of the liquid storage portion exceeds the uppermost end of the pipe, an excessive amount of solution is discharged outside through the pipe. Therefore, since a predetermined amount of solution is constantly stored in the liquid storage portion, the solution can be maintained to absorb mists or particles. In addition, it is possible to reduce the amount of work without filling or discharging the solution of the liquid storage portion.

In the spin coating apparatus according to the aspect of the invention, the air supply device may be provided above the lens base material to supply cleaning air toward the lens base material, and the exhaust unit may absorb contaminated air below the lens base material.

With this configuration, since the air supply device supplies air toward the lens base material above the lens base material, air moves below the lens. Then, the air is absorbed through the exhaust opening that is provided below the lens base material, such that an air flow can be generated. At this time, since the liquid storage portion is provided near the air flow going toward the exhaust opening, mists or particles in the air are absorbed into the liquid of the liquid storage portion.

According to another aspect of the invention, there is provided a method of coating a composition for an antireflection layer that forms an antireflection layer on a lens base material by a spin coating method using the above-described spin coating apparatus. The method includes cleaning the lens base material with a liquid supplied from the cleaning liquid ejection device, and rotating the lens base material held by a holding tool and supplying a composition for an antireflection layer to the lens base material by the antireflection-layer composition ejection device. The supplying of the composition for an antireflection layer is performed in a state where a waste liquid is stored in the liquid storage portion.

With this configuration, since the antireflection layer is formed using the above-described spin coating apparatus, the same effects as described above can be obtained.

### BRIEF DESCRIPTION OF THE DRAWINGS

The invention will be described with reference to the accompanying drawings, wherein like numbers reference like elements.

Fig. 1 is a schematic view of a spin coating apparatus according to an embodiment of the invention.

Fig. 2 is an enlarged view of a holding tool in the above-described embodiment.

Fig. 3A is a cross-sectional view of a lens to be held in the above-described embodiment.

Fig. 3B is a cross-sectional view of a lens to be held in the above-described embodiment.

Fig. 4 is a schematic view of a spin coating apparatus according to a modification of the above-described embodiment.

### DESCRIPTION OF EXEMPLARY EMBODIMENTS

Hereinafter, an embodiment of the invention will be described with reference to the drawings.

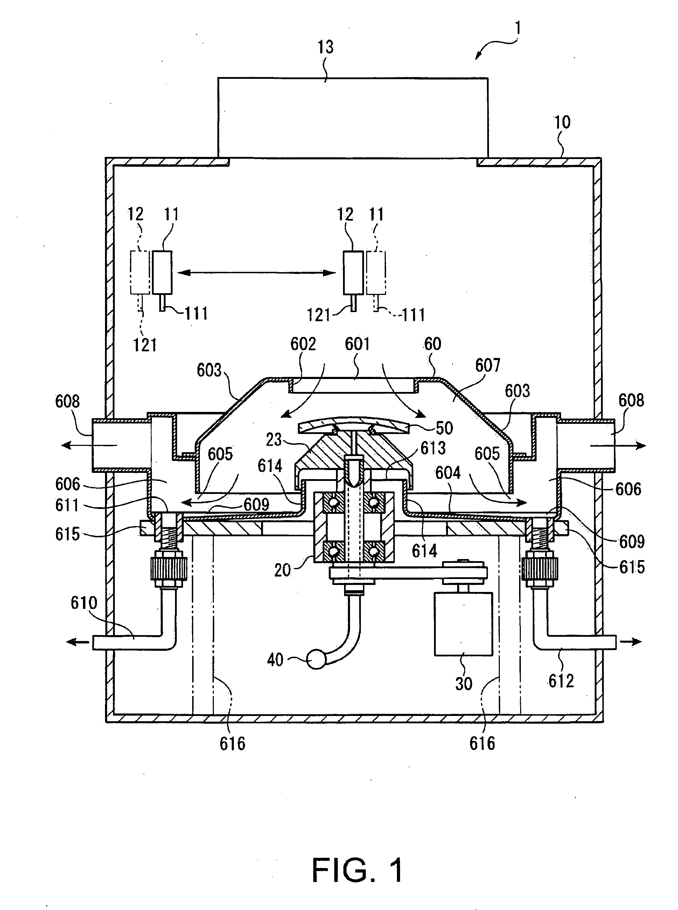

Fig. 1 is a schematic view of a spin coating apparatus 1 according to this embodiment.

The spin coating apparatus 1 includes an apparatus main body 10. A holding tool 20 that holds a lens 50 is substantially provided at the center of the apparatus main body 10, and a unit 60 is provided around the holding tool 20.

The unit 60 has an outer wall 603 to cover the holding tool 20, and an opening 601 is formed at a position of the outer wall 603 facing an upper portion of the lens 50. The opening 601 is formed in a circular shape to be slightly larger than the size of the lens 50. A lower end of the outer wall 603 does not reach a bottom 604 of the unit 60, and a communicating port 605 is formed between the lower end and the bottom 604. An outer circumferential portion 606 is provided in a ring shape over the outer circumference of the outer wall 603. The outer circumferential portion 606 communicates with an inner circumferential portion 607, which is formed between the holding tool 20 and the outer wall 603, through the communicating port 605.

The outer circumferential portion 606 communicates with exhaust openings 608. An arbitrary number of exhaust openings 608 may be provided. In this embodiment, three exhaust openings 608 are formed radially with respect to the outer wall 603. A front end of each of the exhaust openings 608 is connected to an absorption pump (not shown). Then, air inside the apparatus is absorbed by the absorption pump and discharged from the exhaust opening 608 outside the apparatus.

A liquid storage portion 609 that stores a liquid is formed at the bottom 604 of the unit 60. The liquid storage portion 609 has a shape to be inclined downward from its center toward the outer circumference of the unit 60. Further, waste liquid pipes 610 are provided at the bottom 604 to discharge an excessive amount of liquid stored in the liquid storage portion 609. A waste liquid port 611 of each of the waste liquid pipes 610 protrudes from the bottom 604. The height and position of each of the waste liquid pipes 610 can be adjusted. Further, a drain 612 is provided at the bottom 604 to discharge the entire liquid stored in the liquid storage portion 609.

A bottom opening 613 is formed at the center of the bottom 604, and an opening edge stands upright to form an upright portion 614.

A cleaning liquid ejection device 11 and an antireflection-layer composition ejection device 12 that communicate with each other through a pressure tank and a tube (not shown) are disposed above the holding tool 20, and at lower ends of the devices, nozzles 111 and 121 are provided, respectively. The devices are configured to substantially move horizontally between a standby position and a position above the holding tool 20.

A cleaning unit 13 is provided in an upper portion of the apparatus main body 10. The cleaning unit 13 includes an air supply device and a HEPA filter that send air into the apparatus main body 10. Then, air is sent from the cleaning unit 13 toward the lens 50. The inside of the apparatus main body 10 has a partially clean structure.

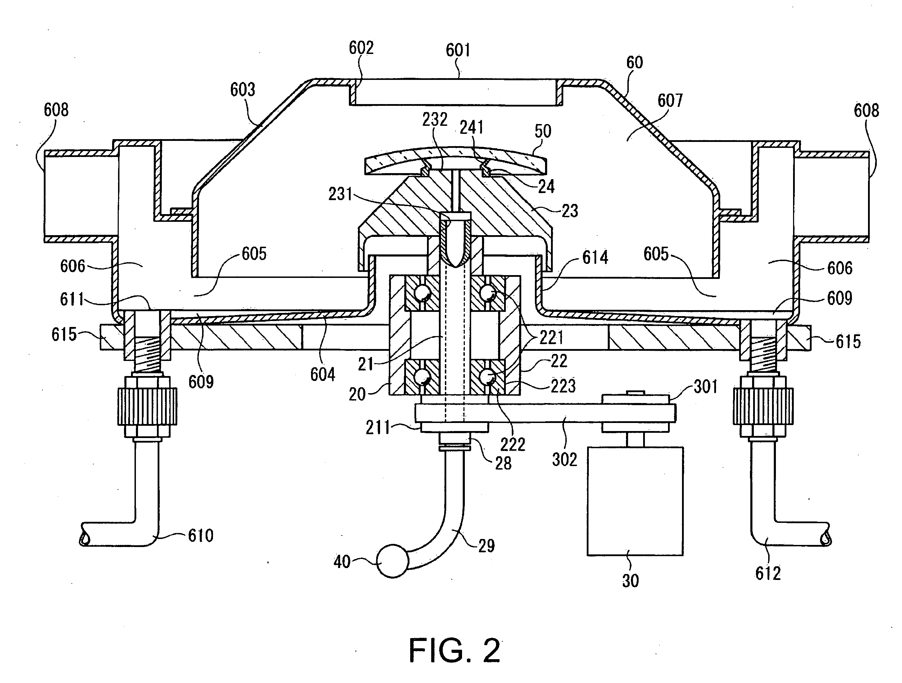

Fig. 2 is a diagram showing the unit 60 and the holding tool 20 on a magnified scale.

The holding tool 20 has a motor 30, a cylindrical rotational shaft 21 that rotates with the motor 30 as a power source, a bearing 223 that rotatably supports the rotational shaft 21, a housing 22 that accommodates the bearing 223, a holder 23 that is provided at one end of the rotational shaft 21, and an absorption pad 24 that is attached to the holder 23. The lens 50 is held on the absorption pad 24.

A synchronous pulley 211 is provided at an end of the rotational shaft 21 opposite to the holder 23. A timing belt 302 is wound around the pulley 211 and a synchronous pulley 301, which is provided in the motor 30, to be tightly stretched therebetween, such that rotation of the motor 30 is transferred to the rotational shaft 21.

A rotary joint 28 is provided at an end of the rotational shaft 21 near the pulley 211, and a pipe 29 from a vacuum pump 40 is connected to the rotary joint 28. With the absorption of the vacuum pump 40, the lens 50 that is placed on the absorption pad 24 is absorbed through the inside of the rotational shaft 21.

The bearing 223 is configured such that a plurality of rotatable balls 221 with respect to the rotational shaft 21 are held by a ball holding portion 222. With the rotation of the balls 221, the rotation of the rotational shaft 21 is smoothly received.

Moreover, an end of the rotational shaft 21 protrudes from the bearing 223, and the holder 23 is inserted into the protruding portion and screwed.

The holder 23 is a disc-shaped member formed of Teflon (Registered Trademark). The holder 23 is configured such that the end of the rotational shaft 21 is inserted into a hole 231 formed at its center and fixed. Further, a protruding portion 232 that stands upright from the edge of the hold 231 is formed, and an inner circumferential portion of the absorption pad 24 is engaged with an outer circumference of the protruding portion 232.

The absorption pad 24 is a member that is formed of nitrile rubber, fluorine-containing rubber, chloroprene rubber, or silicon rubber and has a ring shape in plan view. Further, the absorption pad 24 substantially has a U shape in sectional view. One of the opposing portions in the U shape is supported by the holder 23, and the other portion forms a holding portion 241 of the lens 50.

Moreover, as the material for the absorption pad 24, in addition to the above-described rubber material, various elastic materials can be used to follow the shape of the lens 50 to be closely adhered to the lens 50.

The holding tool 20 is inserted into the bottom opening 613 of the unit 60, then the upright portion 614 and the holder 23 are engaged with each other, and subsequently the entire bottom 604 of the unit 60 is supported by a support plate 615 and fixed thereto. The support plate 615 is supported by pillars 616.

In Fig. 1, the cleaning liquid ejection devi,ce 11 supplies cleaning water, which is used to clean the lens 50, to the lens 50 through the nozzle 111.

The antireflection-layer composition ejection device 12 supplies a composition for an antireflection layer, which is used to form an antireflection layer on the lens 50, to the lens 50 through the nozzle 121. The composition for an antireflection layer is formed of an organic material.

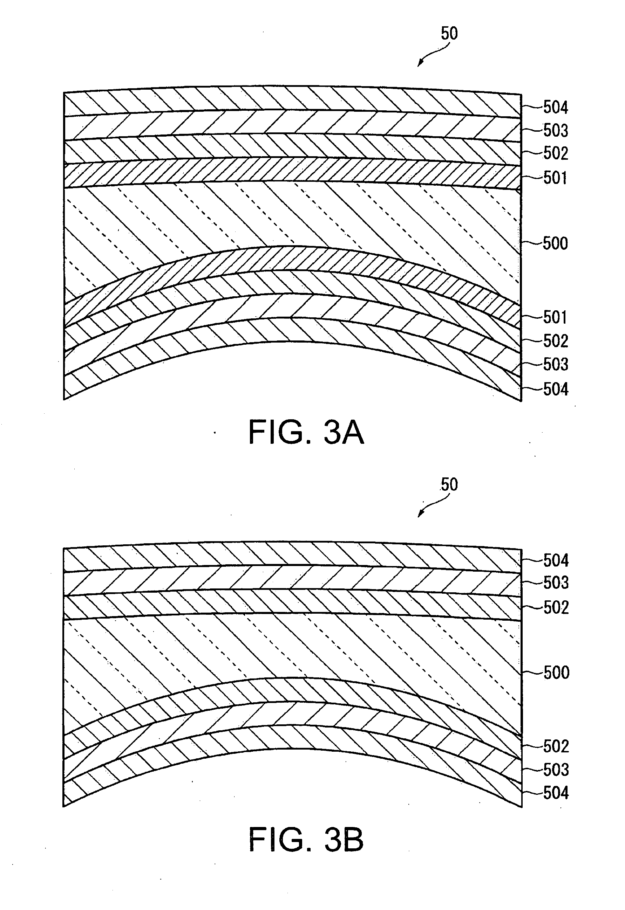

Figs. 3A and 3B are cross-sectional views of the lens 50. In Figs. 3A and 3B, a plurality of layers are laminated on a lens base material 500.

In Fig. 3A, on both the concave and convex surfaces of the lens 50, a primer layer 501, a hard coat layer 502, an antireflection layer 503, and an antifouling layer 504 are sequentially formed from the surface of the lens base material 500.

The lens base material 500 may be formed of plastic but not limited thereto. For example, a transparent material having a refractive index of 1.6 or more is preferably used. Specifically, polythiourethane-based plastic that is produced by causing a compound containing an isocyanate group or an isothiocyanate group to react with a compound containing mercapto group, or episulfide-based plastic that is produced by polymerizing and curing a raw polymer including a compound containing an episulfide group can be used as the material for the lens base material.

As the compound containing the isocyanate group or the isothiocyanate group as a main component of polythiourethane-based plastic, any known compound can be used without limit.

Specific examples of the compound containing the isocyanate group include ethylene diisocyanate, trimethylene diisocyanate, 2,4,4-trimethylhexane diisocyanate, hexamethylene diisocyanate, and m-xylylene diisocyanate.

The primer layer 501 is formed of urethane resin. The primer layer 501 is formed when adhesiveness of the lens base material 500 and the hard coat layer 502 needs to be increased or when impact resistance needs to be improved. As shown in Fig. 3B, however, the hard coat layer 502 may be formed directly on the lens base material 500 without forming the primer layer 501.

The hard coat layer 502 is formed of a silicon or acrylic material, for example, to have a thickness of approximately 2 µm. The hard coat layer 502 prevents the lens 50 from being damaged. When the hard coat layer 502 is formed directly on the lens base material 500, the surface of the lens base material 500 is preferably subjected to an alkaline treatment, an acid treatment, a polishing treatment by fine grains, and a plasma treatment in advance. Accordingly, adhesiveness of the lens base material 500 and the hard coat layer 502 is improved.

The antireflection layer 503 is formed to prevent reflection at the surface of the lens 50. At this time, the antireflection layer 503 has a lower refractive index than those of the underlying hard coat layer 502, the primer layer 501, and the lens base material 500.

The antireflection layer 503 is coated on the hard coat layer 502 of the lens 50 by the antireflection-layer composition ejection device 12. The antireflection layer 503 may be a single-layer film or a multilayer film.

As a coating liquid that is coated by the antireflection-layer composition ejection device 12, a fluorine-based compound or a silane-based compound can be used. In this embodiment, as the coating liquid, a liquid that is obtained by the following method. First, a silane compound is diluted with an organic solvent. Next, water or weak hydrochloric acid or acetic acid is added to perform hydrolysis, if necessary. Next, a sol, in which silica-based fine grains are dispersed in the organic solvent in a colloidal shape, is added and a surfactant, an ultraviolet absorbent, and an antioxidant are added, if necessary. Next, the resultant liquid is sufficiently stirred.

In order to realize a desired optical characteristic, the thickness of the antireflection layer 503 is controlled to a range of 100 nm ± 10 nm, for example, in the single-layer film.

The antifouling layer 504, in which a fluorine-based organic compound is added as an antifouling component, is formed as the outermost layer of the lens 50.

Hereinafter, a method of manufacturing the lens 50 according to this embodiment will be described.

### Hard Coat Layer Forming Step

A hard coat liquid is coated on the lens base material 500. Any coating method may be used. For example, a dipping method, a spin coating method, a spray coating method, a roll coating method, and a flow coating method may be exemplified.

In order to increase adhesiveness of the lens base material 500 and the hard coat layer 502, an alkaline treatment, an acid treatment, a surfactant treatment, or a plasma treatment may be performed before the hard coat liquid is coated.

After the hard coat liquid is coated, drying is performed at a predetermined temperature, for example, 40 to 200°C for several hours. Accordingly, the hard coat layer 502 is formed.

### Plasma Treatment Step

A surface modification treatment is performed on the surface of the hard coat layer 502 using plasma.

### Lens Holding Step by Holding Tool

The lens 50, in which the hard coat layer 502 is formed on the lens base material 500, is held by the holding tool 20.

To this end, the lens 50 is absorbed and chucked by the vacuum pump 40. At this time, the holding portion 241 of the absorption pad 24 is elastically deformed to follow the shape of the lens 50, such that the lens 50 is securely held in place.

### Cleaning Step

The cleaning liquid ejection device 11 is moved right above the lens 50, and cleaning water is supplied to the hard coat layer 502 for a predetermined time. Thereafter, even when the supply of cleaning water stops, the lens 50 continues to rotate, such that cleaning water that remains on the surface of the hard coat layer 502 is shaken off. Accordingly, the hard coat layer 502 is cleaned and dried.

Further, the cleaning liquid that is shaken off by the rotation is stored in the liquid storage portion 609. If the level of the liquid stored in the liquid storage portion 609 exceeds the height of the waste liquid port 611 that protrudes from the bottom 604, an excessive amount of liquid is discharged outside through the waste liquid pipe 610.

### Antireflection-Layer Composition Ejection Step

After the cleaning step is completed, the cleaning liquid ejection device 11 is moved to the standby position, and the antireflection-layer composition ejection device 12 is moved right above the lens 50 to eject the composition for an antireflection layer on the surface of the hard coat layer 502. At this time, the rotation speed of the lens 50 by the holding tool 20 is set to be low.

After the composition for an antireflection layer is ejected on the hard coat layer 502, the lens 50 rotates at high speed, and the composition for an antireflection layer is splashed from the surface of the hard coat layer 502. Then, the thickness of the coated composition is made uniform. Thereafter, the coated composition is dried.

The cleaning unit 13 and the absorption pump that is connected to the exhaust opening 608 are constantly operating and generate an air flow in the apparatus main body 10. With this air flow, fresh air that is sent from the cleaning unit 13 toward the lens 50 passes through the opening 601 and flows the inner circumferential portion 607 downward. Then, air passes by the liquid storage portion 609, flows out of the communicating port 605 to the inner circumferential portion 606, and is discharged from the exhaust opening 608 outside the apparatus.

Meanwhile, if the composition for an antireflection layer is ejected from the antireflection-layer composition ejection device 12 to the lens 50, and the lens 50 rotates at high speed, mists or particles occur. The mists or particles are floating around the lens 50.

Accordingly, the mists or particles are carried around the liquid storage portion 609 according to the air flow and absorbed into the liquid stored in the liquid storage portion 609.

Further, similarly to the cleaning liquid, the composition for an antireflection layer that is shaken off by high-speed rotation is stored in the liquid storage portion 609.

### Lens Curing Step

Thereafter, the lens 50, on which the composition for an antireflection layer is formed, is cured. Accordingly, the antireflection layer 503 is formed on the hard coat layer 502.

When the antireflection layer 503 has a multilayer structure, the above-described step is repeatedly performed.

Moreover, after the above-described steps are performed on one surface of the lens base material 500, the lens base material 500 is turned over and set on the holding tool 20. Then, the antireflection layer 503 is formed on the other surface by the same procedure.

### Antifouling Layer Forming Step

The lens 50, on which the antireflection layer 503 is formed, is removed from the apparatus, and the antifouling layer 504 as the outermost layer of the lens 50 is formed on the antireflection layer 503 by a dipping method or a vacuum deposition method. Thereafter, necessary treatments are performed to complete the lens 50.

According to this embodiment described above, the following effects can be obtained.

(1) Since the apparatus main body 10 includes the cleaning unit 13 and the exhaust unit, an air flow can be generated in the apparatus main body 10 to flow the inner circumferential portion 607 downward from the opening 601 of the unit 60, to pass by the liquid storage portion 609, and to flow the exhaust openings 608. With this air flow, mists or particles that are floating around the lens 50 and occur when the composition for an antireflection layer is ejected and the lens 50 rotates at high speed are carried. Then, the mists or particles are absorbed into the liquid stored in the liquid storage portion 609 when passing by the liquid storage portion 609.

, Accordingly, the mists or particles that are floating around the lens 50 can be removed and can be prevented from being stuck to the lens 50. Therefore, a lens having an excellent exterior appearance can be provided.

(2) Since the unit 60 having the outer wall 603 is provided in the apparatus main body 10, the air flow that passes by the liquid storage portion 609 can be reliably generated. Therefore, the mists or particles can be efficiently absorbed into the liquid of the liquid storage portion 609.

(3) Since air is absorbed from the exhaust opening 608 by the absorption pump, air that is sent from the air supply device 70 is reliably discharged from the exhaust opening 608. Therefore, there is no case where the mists or particles float and become stuck to the surface of the lens 50.

(4) Since the waste liquid port 611 of the waste liquid pipe 610 provided at the bottom 604 of the unit 60 protrudes upward from the bottom 604, the amount of the solution of the liquid storage portion 609 can be maintained constant to the height of the waste liquid port 611. Therefore, it is possible to reduce the amount of work to without filling or discharging the solution of the liquid storage portion 609.

Moreover, the invention is not limited to the above-described embodiment, but various modifications and changes can be made within the scope that can achieve the object of the invention.

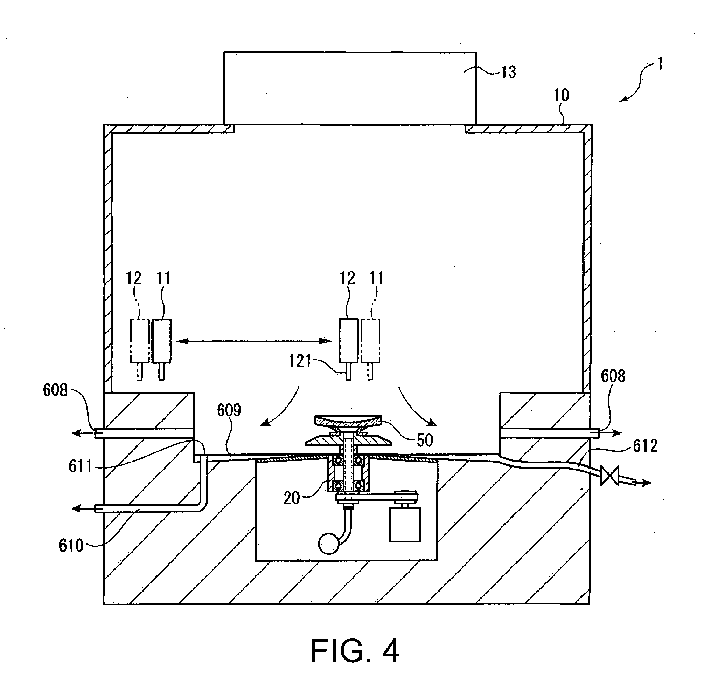

For example, in the above-described embodiment, the spin coating apparatus 1 includes the unit 60 that forms the outer wall 603. Alternatively, as shown in Fig. 4, the unit 60 may not be provided.

In this case, fresh air that is sent from the cleaning unit 13 toward the lens 50 flows downward along the holding tool 20. Then, when colliding against the liquid storage portion 609, air spreads the outer circumference and is discharged from the exhaust openings 608. Since the absorption pump (not shown) is connected to the exhaust openings 608, contaminated air in the apparatus is reliably discharged from the exhaust openings 608. Therefore, in this case, the same effects as the above-described embodiment can be obtained.

Further, in the above-described embodiment, the three exhaust openings 608 are provided, but the number of openings is not limited to three. A required number of openings may be provided.

Although the invention is shown and described by way of a specific embodiment, various modifications on the shape, material, quantity, and other detailed configuration from the above-described embodiment can be made by those skilled in the art within the scope without departing from the technical spirit and the scope of the invention.

The invention can be used in a lens for glasses and all other lenses.

## Claims

1. A spin coating apparatus comprising:
a cleaning liquid ejection device that supplies a cleaning liquid primarily containing water to a surface of a lens base material;
an antireflection-layer composition ejection device that supplies a composition for an antireflection layer to form an antireflection layer on the surface of the lens base material;
a holding portion that rotatably holds the lens base material;
a liquid storage portion that stores the liquids being supplied from the cleaning liquid ejection device and the antireflection-layer composition ejection device to the lens base material and flowing down;
an apparatus main body in which the lens base material is accommodated;
an air supply device that supplies cleaning air to the apparatus main body; and
an exhaust unit that exhausts contaminated air in the apparatus main body to the outside.

2. The spin coating apparatus according to Claim 1, further comprising:
an outer wall that covers the lens base material in the apparatus main body,
wherein an opening, which allows a flow of cleaning air to be sent from the air supply device to the lens base material, is formed in an upper portion of the outer wall, and an exhaust opening is formed in an outer circumferential portion that is formed to surround the outer circumference of the outer wall.

3. The spin coating apparatus according to claim 1 or claim 2,
wherein a pipe is formed in the storage portion upright from the bottom of the liquid storage portion to allow a waste liquid to flow outside the apparatus.

4. The spin coating apparatus according to any one of claims 1-3,
wherein the air supply device is provided above the lens base material to supply cleaning air toward the lens base material, and the exhaust unit absorbs contaminated air below the lens base material.

5. A method of coating a composition for an antireflection layer that forms an antireflection layer on a lens base material by a spin coating method using the spin coating apparatus according to any one of claims 1-4, the method comprising:
cleaning the lens base material with a liquid supplied from the cleaning liquid ejection device; and
rotating the lens base material held by a holding tool and supplying a composition for an antireflection layer to the lens base material by the antireflection layer composition ejection device.
wherein the supplying of the composition for an antireflection layer is performed in a state where a waste liquid is stored in the liquid storage portion.
